Europäisches Patentamt

European Patent Office

Office européen des brevets

(19)

(11) Publication number: **0 048 595**
**B1**

(12) **EUROPEAN PATENT SPECIFICATION**

(45) Date of publication of patent specification: **25.09.85**

(21) Application number: **81304271.0**

(22) Date of filing: **17.09.81**

(51) Int. Cl.⁴: **G 02 F 1/03,** G 06 K 15/12,
B 41 J 3/20, G 02 F 1/31

(54) Line printers.

(30) Priority: **17.09.80 US 187916**
**17.09.80 US 187917**

(43) Date of publication of application:
**31.03.82 Bulletin 82/13**

(45) Publication of the grant of the patent:
**25.09.85 Bulletin 85/39**

(84) Designated Contracting States:
**DE FR GB**

(56) References cited:
**EP-A-0 021 754**
**DE-A-2 711 194**

**"Applied Optics", 19 (1980), pages 164-172**
**OPTO-ELECTRONICS, vol. 4, 1972, London, GB**
**P. WATERWORTH et al. "Integrated electro-**
**optic modulator arrays" pages 339-340**

(73) Proprietor: **XEROX CORPORATION**
**Xerox Square - 020**
**Rochester New York 14644 (US)**

(72) Inventor: **Turner, William D.**
**1022 Roxbury Road**
**San Marino California 91108 (US)**
Inventor: **Sprague, Robert A.**
**13755 Calle Tacuba**
**Saratoga California 95070 (US)**

(74) Representative: **Weatherald, Keith Baynes et al**
**European Patent Attorney Rank Xerox Limited**
**Patent Department 338 Euston Road**
**London NW1 3BH (GB)**

Courier Press, Leamington Spa, England.

## Description

This invention relates to line printers and, more particularly, to differential encoding for fringe field responsive electro-optic line printers.

It has been shown that an electro-optic element having a plurality of individually addressable electrodes can be used as a multi-gate light valve for line printing. See, for example, "Light Gates Give Data Recorder Improved Hardcopy Resolution," *Electronic Design*, July 19, 1979, pp. 31—32; "Polarizing Filters Plot Analog Waveforms," *Machine Design*, Vol. 51, No. 17, July 26, 1979, p. 62; and "Data Recorder Eliminates Problem of Linearity," *Design News*, February 4, 1980, pp. 56—57.

Almost any optically transparent electro-optical material can be used as the electro-optic element of such a light valve. As of now the most promising materials appear to be $LiNbO_3$ and $LiTaO_3$, but there are other materials which qualify for consideration, including BSN, KDP, $KD^xP$, $Ba_2NaNb_5O_{15}$ and PLZT. In any event, the electrodes of such a light valve are intimately coupled to the electro-optic element and are distributed in non-overlapping relationship widthwise of the electro-optic element (i.e., orthogonally relative to its optical axis), typically on equidistantly separated centers, so that there is a generally uniform inter-electrode gap spacing.

To perform line printing with a multi-gate light valve of the foregoing type, a photosensitive recording medium, such as a xerographic photoreceptor, is exposed in an image configuration as it advances in a cross line direction (i.e., a line pitch direction) relative to the light valve. More particularly, to carry out the exposure process, a sheet-like collimated light beam is transmitted through the electro-optic element of the light valve, either along its optical axis for straight-through transmission or at a slight angle relative to that axis for total internal reflection. Furthermore, successive sets of digital bits or analog signal samples (hereinafter collectively referred to as "data samples"), which represent respective collections of picture elements, or "pixels," for successive lines of the image, are sequentially applied to the electrodes. As a result, localized electric bulk or fringe fields are created within the electro-optic element in the immediate vicinity of any electrodes to which non-reference level data samples are applied. These fields, in turn, cause localized variations in the refractive index of the electro-optic element within an interaction region (i.e., a light beam illuminated region of the electro-optic element which is subject to being penetrated by the electric fields). Thus, the phase front or polarization of the light beam is modulated (hereinafter generically referred to as p-modulation) in accordance with the data samples applied to the electrodes as the light beam passes through the interaction region. P-sensitive readout optics are used to convert the phase front or polarization modulation of the light beam into a correspondingly modulated intensity profile. For example, if the phase front of the light beam is modulated, Schlieren central dark field or central bright field imaging optics are used to image the modulated light beam onto the recording medium. Alternatively, if the input light beam is polarized, the polarization to intensity modulation conversion process may be performed by passing the polarization modulated output beam through a polarization analyzer prior to imaging it on the recording medium. "P-sensitive optics" is, of course, another coined term which is used herein to generically refer to optics for performing a phase front modulation or polarization modulation to intensity profile modulation conversion process on the light beam.

The article "PLET spatial light modulator for a 1-D hologram memory," by K. Keno and T. Sakn, Applied Optics, Jan. 1980, pp. 164—172, discloses periodically imposing opposite polarities on encoded data samples to suppress the residual refractive-index effect grown, when the optical gate is driven under a constant electric-field direction.

The present invention provides an electro-optic line printer which is as claimed in the appended claims.

In accordance with the present invention, the input data for an electro-optic printer of the foregoing type are differentially encoded, thereby reducing the number of electrodes the multi-gate light valve requires to achieve a given resolution by a factor of just slightly less than two. Each data sample of the differentially encoded data stream, other than the first, has a magnitude whose difference from the previous differentially encoded data sample corresponds to the magnitude of a respective input data sample. The first sample in the differentially encoded data stream is referenced to a common potential, such as ground.

In keeping with this invention, the polarity of the differentially encoded data samples is periodically reversed, thereby protecting the light valve from optical damage by inhibiting trapped carriers from accumulating therein.

The features and advantages of this invention will become more clearly apparent when the following detailed description is read in conjunction with the attached drawings, in which:

Figure 1 is a schematic side view of a TIR (total internal reflection), electro-optic line printer which is constructed to take advantage of differential encoding;

Figure 2 is a schematic worm's eye view of the electro-optic line printer shown in Fig. 1;

Figure 3 is an enlarged side view of a TIR light valve for the electro-optic line printer of Figs. 1 and 2;

Figure 4 is an enlarged bottom plan view of the TIR light valve of Fig. 3;

Figure 5 is a block diagram showing a differential encoder as typically used to provide differentially encoded digital data for the TIR light valve of Figs. 3 and 4;

Figures 6A and 6B are charts illustrating reverse polarity differential encoding of a digital data stream and the opposing polarity fringe fields which are produced when such differentially encoded data is applied to the electrodes of the TIR light valve shown in Figs. 3 and 4; and

Figure 7 is a simplified schematic diagram of a digital differential encoder which reverses the polarity of the differentially encoded data stream on a line-by-line basis.

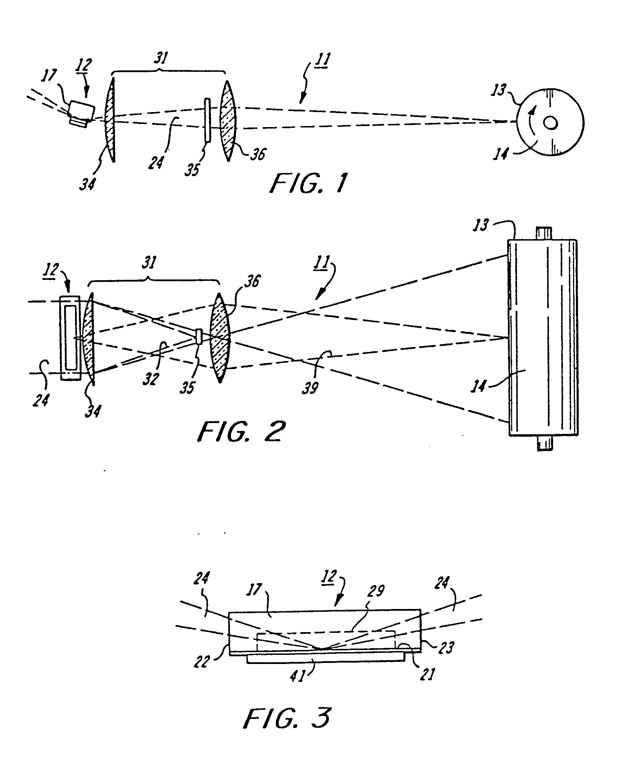

Turning now to the drawings, and at this point especially to Figs. 1 and 2, there is an electro-optic line printer 11 comprising a multi-gate light valve 12 for exposing a photosensitive recording medium 13 in an image configuration. The recording medium 13 is depicted as being a photoconductively coated xerographic drum 14 which is rotated (by means not shown) in the direction of the arrow to advance in a cross line direction relative to the light valve 12. It will, however, be evident that other xerographic and non-xerographic recording media could be used, including photoconductively coated xerographic belts and plates, as well as photosensitive film and coated paper which may be supplied as web or cut sheet stock. Hence the recording medium 13 should be visualized in the generalized case as being a photosensitive medium which is exposed in an image configuration while advancing in a cross line or line pitch direction relative to the light valve 12.

As best shown in Figs. 3—4, the light valve 12 includes an electro-optic element 17, and a plurality of individually addressable electrodes 18a—18i. A basic advantage of this invention is that ground or reference plane electrodes are unnecessary because the data applied to the electrodes 18a—18i are differentially encoded as hereinafter described.

In this particular embodiment, the light valve 12 is configured for a total internal reflection (TIR) mode of operation. Thus the electro-optic element 17 is, say, a y cut crystal of LiNbO$_3$ having a polished reflecting surface 21 which is integral with and disposed between polished input and output faces 22 and 23, respectively. The electrodes 18a—18i are, in turn, intimately coupled to the electro-optic element 17 adjacent the reflecting surface 21 and are distributed in non-overlapping relationship across essentially the full width thereof. Suitably, the electrodes 18a—18i are approximately 1—30 microns wide and are on centers which are more or less equidistantly separated to provide a generally uniform inter-electrode gap spacing of 1—30 μm.

As illustrated, the electrodes 18a—18i extend generally parallel to the optical axis of the electro-optic element 17 so that the light valve 12 produces a diffraction pattern which is generally symmetrical about the zero order. It should, however, be understood that the electrodes 18a—18i could be disposed at a so-called Bragg angle relative to the optical axis of the electro-optic element 17 to provide an asymmetrical diffraction characteristic for the light valve 12.

Referring to Figs. 1—4 for a review of the operation of the line printer 11, a sheet-like collimated beam of light 24 from a suitable source, such as a laser (not shown), is transmitted through the input face 22 of the electro-optic element 17 at a grazing angle of incidence relative to the reflecting surface 21. The light beam 24 is brought to a wedge shaped focus (by means not shown) at approximately the centerline of the reflecting surface 21 and is totally internally reflected therefrom for subsequent transmission through the output face 23. As will be seen, the light beam 24 illuminates substantially the full width of the electro-optic element 17 and is phase front modulated while passing therethrough in accordance with successive sets of raw input data samples which have magnitudes representing exposure values for respective picture elements for successive lines of the image.

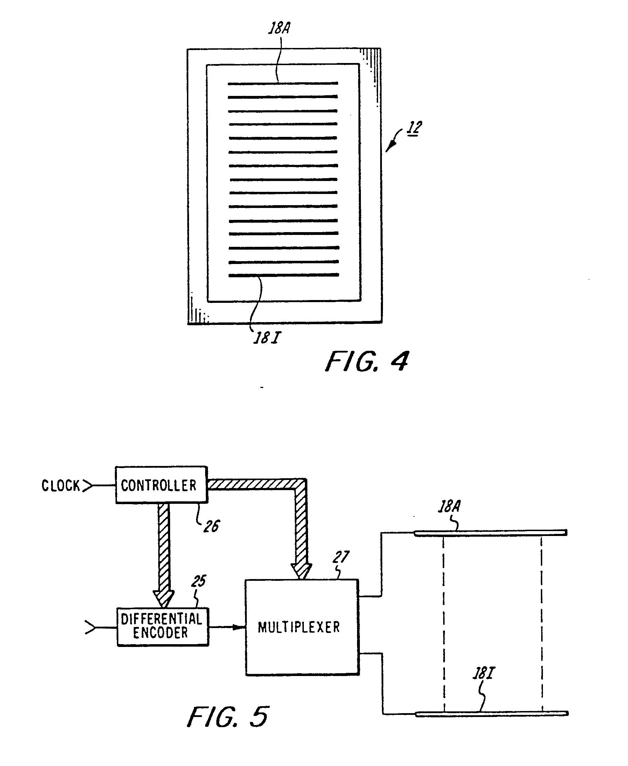

In accordance with an embodiment of the present invention, as shown in Fig. 5, there is a differential encoder 25 for differentially encoding the raw input data samples on, say, a line-by-line basis in response to control signals from a controller 26. For illustrative purposes, it has been assumed that the input data samples define a serial data stream having a predetermined data rate. In that event, the differential encoder 25 serially encodes the input data at an encoding rate which is matched to the input data rate and feeds the differentially encoded data to a multiplexer 27 or the like. The multiplexer 27 responds to further control signals from the controller 26 to sequentially apply or "ripple" the differentially encoded data onto the electrodes 18a—18i at a ripple rate which is matched to the data rate. If need be, data buffers (not shown) may be used to match the input data rate to the encoding rate of the encoder 25 and to match the encoded data rate to the ripple rate of the multiplexer 27. The aim is to ensure that the differentially encoded counterparts of successive input data samples are applied to immediately adjacent ones of the electrodes 18a—18i.

As will be appreciated, the input data may be processed (by means not shown) upstream of the differential encoder 25 for text editing, formatting or other purposes. Also, it should be understood that there preferably are sample and hold circuits between the multiplexer 27 and the electrodes 18a—18i for maintaining the differentially encoded data samples for each line of the image on the electrodes 18a—18i for essentially a full line printing time (i.e., the time allotted to printing a single line of the image).

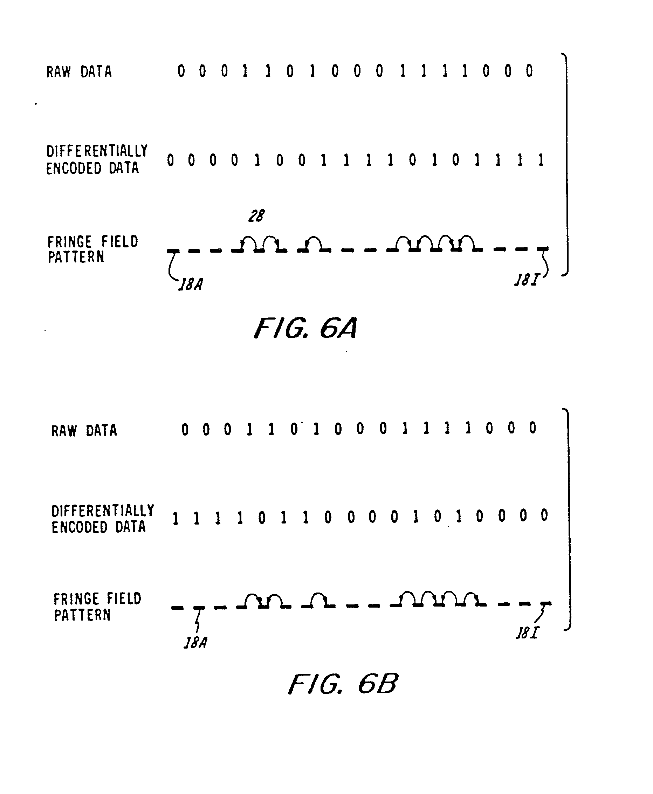

Turning to Figs. 6A and 6B, it will be seen that differential encoding of a raw input data stream provides a differentially encoded data sample for each of the raw input data samples. Each differentially encoded data sample, other than the first sample for each line of the image, has a magnitude whose difference from the previous differentially encoded data sample corresponds to the magnitude of a respective input data sample.

The first differentially encoded for each line of the image is referenced to a common reference potential, such as ground.

In keeping with this invention, the polarity of the differentially encoded data stream is periodically reversed, thereby periodically reversing the nominal polarity of the fringe fields applied to the electro-optic element 17 (Figs. 1—3). To that end, in the illustrated embodiment, the polarity of the differentially encoded samples is reversed on a line-by-line basis. The actual polarity of the fringe fields applied to the electro-optic element 17 is, of course, data dependent. But, the nominal polarity of the fringe fields depends on whether the first differentially encoded data sample is referenced to a low or high reference level (i.e., in the digital case, to a low ("0") logic level as in Fig. 6a or to a high ("1") logic level as in Fig. 6b). If identical input data streams are differentially encoded with opposite polarities, the fringe fields produced within the electro-optic element 17 will have opposite polarities as indicated by the arrowheads in Figs. 6A and 6B. Reversing the nominal polarity of the fringe fields aids in preventing trapped carriers from accumulating in the electro-optic element 17 and, therefore, assists in protecting the electro-optic element 17 against optical damage.

Returning to Figs. 3—6, when the differentially encoded data samples for any given line of an image are applied to the electrodes 18a—18i as previously described, there are electrode-to-electrode voltage drops between each adjacent pair of electrodes to which encoded samples of materially different magnitudes are applied. These voltage drops produce localized electric fringe fields 28 within an interaction region 29 of the electro-optic element 17, thereby creating localized variations in the refractive index of the electro-optic element 17 widthwise of the interaction region 29. Inasmuch as the electrode-to-electrode voltage drops are equal to the magnitudes of successive ones of the raw input data samples relative to, say, ground, the magnitude of the refractive index variations which are produced in response to the encoded data samples for successive lines of the image faithfully represent the raw input data samples for those lines. Consequently, the phase front or polarization of the light beam 24 is sequentially spatially modulated in accordance with the data samples for successive lines of the image as the light beam 24 passes through the interaction region 29 of the electro-optic element 17.

To expose the recording medium 13 in an image configuration, there suitably are Schlieren central dark field imaging optics 31 which are optically aligned between the electro-optic element 17 and the recording medium 13 for imaging the light beam 24 onto the recording medium 13. The imaging optics 31 convert the spatial phase front modulation of the light beam 24 into a correspondingly modulated intensity profile and provide any magnification that is required to obtain an image of a desired width. To accomplish that, the imaging optics 31 suitably include a field lens 34 for focusing the zero order diffraction components 32 of the phase front modulated light beam 24 onto a central stop 35 and an imaging lens 36 for imaging the scattered higher order diffraction components onto the recording medium 13. The field lens 34 is optically aligned between the electro-optic element 17 and the stop 35 so that substantially all of the zero order components 32 of the light beam 24 are blocked by the stop 35. The higher order diffraction components of the light beam 24 scatter around the stop 35 and are collected by the imaging lens 36 which, in turn, causes them to fall onto the light valve image plane defined by the recording medium 13. Of course, other p-sensitive readout optics could be used to convert the phase front or polarization modulated light beam provided by the electro-optic element 17 into a light beam having a correspondingly modulated intensity profile.

As indicated in Fig. 2 by the broken lines 39, each adjacent pair of electrodes 18a—18i cooperates with the electro-optic element 17 and the p-sensitive readout optics 36 to effectively define a local modulator for creating a picture element at a unique, spatially predetermined position along each line of the image. Successive sets of differentially encoded data samples are applied to these local modulators while the recording medium 13 is advancing in a cross line direction relative to the light valve 12 to print successive lines of an image. Thus it will be understood that number of picture elements printed per scan line of the image is equal to the number of electrodes 18a—18i minus one.

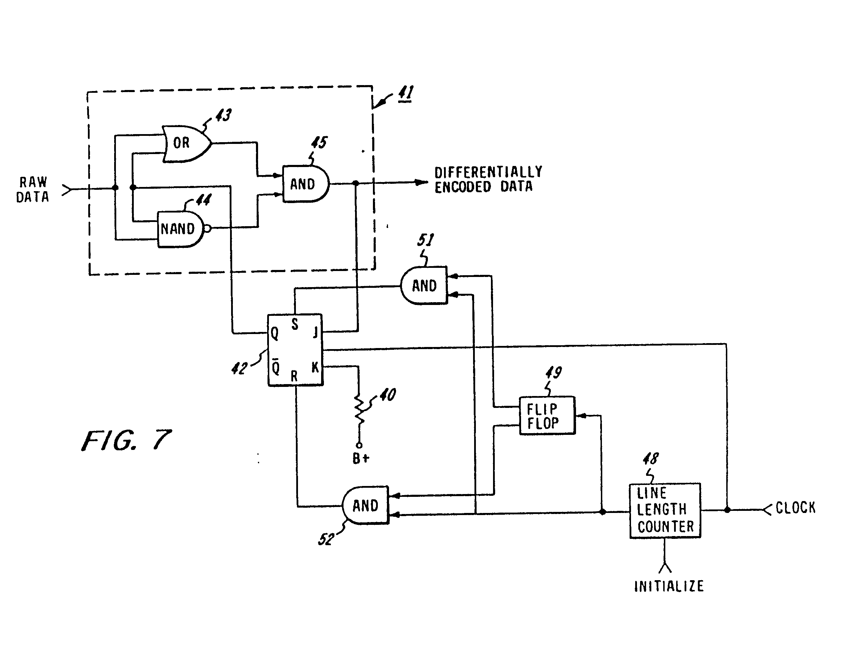

Referring now to Fig. 7, there is an encoder 25 for differentially encoding raw digital input data samples or bits on a line-by-line basis and for periodically reversing the nominal polarity of the differentially encoded data. For illustrative purposes it has been assumed that the input bits are referenced to a low ("0") logic level reference potential. Accordingly, to perform the differential encoding, there is an exclusive OR gate 41 and a single stage shift register 42. In operation, the raw input data samples are serially applied to one inlet of the OR gate 41 at a predetermined data rate. The shift register 42 serially feeds back the differentially encoded data samples from the outlet of the OR gate 41 to the other inlet thereof at the same rate but with a one sample delay, so that each input data sample is exclusively ORed with the differentially encoded counterpart of the immediately preceding data sample. To accomplish that, the shift register 42 suitably is a J—K flip-flop which has its J inlet coupled to the outlet of the OR gate 41, its K inlet maintained at, say, a high ("1") logic level by a pull-up resistor 43, its clock inlet coupled to receive clock pulses at the aforesaid data rate from a suitable source (not shown), and its Q outlet coupled to the second or other inlet of the OR gate 41. Due to the exclusive ORing of each raw data sample with the immediately preceding differentially encoded data sample, there is a logic level transition in the differentially encoded data stream for each high ("1") logic level input data sample, but not for any of the low ("0") logic level input samples. Hence, the magnitude of each of the differentially encoded data samples represents the magnitude of a corresponding input data sample as referenced to the magnitude of the immediately preceding differentially encoded data sample. In passing it should be noted that if the raw input data samples happen to be referenced to a high ("1") logic level, an exclusive NOR gate (not shown) could be used to provide a differentially encoded data stream which exhibits transitions only in response to the low ("0") logic level input samples, rather than the high ("1") logic level signals. For that reason, the term "exclusive OR-type gate" is used herein to generically cover the exclusive OR and NOR possibilities.

As illustrated, the exclusive OR gate 41 comprises an OR gate 43, a NAND gate 44, and an AND gate 45. The OR gate 43 and the NAND gate 44 each have one inlet coupled to receive input bits from a serial data bus 46 and another inlet coupled to receive differentially encoded data samples from the Q outlet of the flip-flop 42. The outlet of the OR gate 43 is coupled to one inlet of the AND gate 45, and the outlet of the NAND gate 44 is coupled to another inlet of the AND gate 45. A differentially encoded data stream appears at the outlet of the AND gate 45 because the AND gate 45 reverses states (i.e., switches from an enabled state to a disabled state or vice-versa) to provide a logic level transition in the differentially encoded data stream in response to each high ("1") logic level input data sample, but not in response to any low ("0") logic level input samples.

To protect the electro-optic element 17 against optical damage, provision is made in the differential encoder 25 for periodically reversing the nominal polarity of the differentially encoded data stream. For that purpose, as illustrated, there is a line length counter 48 which has its terminal count outlet coupled to the clock inlet of a flip-flop 49 which, in turn, has one outlet coupled to a SET inlet of the flip-flop 42, and another outlet coupled to a RESET inlet of the flip-flop 42 through separate AND gates 51 and 52, respectively. The counter 48 is incremented by the clock pulses at a rate selected to equal the data rate so that the counter 48 provides a control signal for reversing the state of the flip-flop 49 immediately after the final data sample for each line of the image is encoded and before the first data sample for the next line of the image is encoded. Thus, the flip-flop 42 alternately sets and resets on a line-by-line basis, whereby the differential encoding of the data samples for successive lines of the image is alternately initiated with a high ("1") logic level or a low ("0") reference pulse at the Q outlet of the flip-flop 42. Consequently, as shown in Figs. 6A and 6B, the encoding is performed on a line-by-line basis with opposite nominal polarities for successive lines of the image.

In view of the foregoing, it will be evident that a multi-gate light valve for an electro-optic line printer may be significantly simplified if the input data are differentially encoded. In particular, it will be understood that such input data encoding reduces the number of electrodes the light valve requires to provide the line printer with a given resolution by a factor of just less than two. Moreover, it will be appreciated that periodically reversing the polarity of the differentially encoded data protects the electro-optic element of the light valve against optical damage.

**Claims**

1. An electro-optic line printer (11) for printing an image on a photosensitive recording medium (13) in response to successive sets of input data samples having magnitudes representing exposure values for picture elements on successive lines of said image, said printer (11) comprising:
   a multi-gate light valve (12) having an optically transmissive electro-optic element (17) having a linear array of spaced-apart individually-addressable electrodes (18a—18i), and
   means for transmitting a sheet-like light beam (24), extending across the linear array, through an interaction region (29) of said electro-optic element (17) so that it is sequentially spatially modulated in accordance with the input data samples for successive lines of said image, characterised in that
   the electro-optic element (17) has a polished major face (21) on which and in intimate contact with which the electrodes (18a—18i) are disposed in the form of fingers, in that the sheet-like light beam (24) is a collimated beam and is transmitted through the electro-optic element (17) so that it falls on the polished face (21) and is totally internally reflected from it, and in that there are provided
   encoding means (25) for differentially encoding said input samples to provide differentially-encoded data samples having sample-to-sample voltage drops corresponding to the magnitudes of respective input data samples,
   means (27) coupled between said encoding means (25) and said electrodes (18a—18i), for applying said encoded samples to said electrodes (18a—18i), thereby creating successive electric fringe field patterns which define the interaction region (29) of said electro-optic element (17), and
   means (42, 48, 49, 51, 52) coupled to said encoding means (25) for periodically imposing opposite polarities on said encoded data samples.

2. The electro-optic line printer (11) of Claim 1, further characterized in that said input data samples are serial digital data bits having high and low logic levels and a predetermined data rate, and
   said differential encoder (25) digitally encodes said bits to provide digitally-encoded data samples having sample-to-sample logic level transitions to represent bits of one logic level and sample-to-sample logic level continuity to represent bits of the other level.

3. The electro-optic line printer (11) of Claim 2, further characterized in that

said encoder (25) includes an exclusive OR-type gate (41), a single stage shift register (42), and means for applying clock pulses to said shift register at said data rate, said gate (41) having a pair of inlets and an outlet;

said shift register (42) is coupled between the outlet and one inlet of said gate (41) for serially applying successive differentially-encoded data samples to said gate (41); and

said bits are serially applied the other inlet of said gate (41), whereby differentially-encoded data samples are generated in response to all except a first of said bits by exclusively ORing each bit with the encoded sample generated in response to an immediately-preceding bit.

4. The electro-optic line printer (11) of any preceding Claim, characterized in that the polarity of said encoded data samples is reversed on a line-by-line basis, thereby reversing the nominal polarity of said fringe fields on a line-by-line basis.

5. The printer of Claim 4, characterized by having a line length counter (48) which is incremented at a predetermined data rate to supply control signals for marking boundaries between the input data samples for successive lines of said image, and means (49, 51, 52, 42) for reversing the polarity of said encoded data samples in response to each of said control signals.

**Patentansprüche**

1. Elektrooptische Vorrichtung (11) zum zeilenweisen Drucken eines Bildes auf ein fotosensitives Aufzeichnungsmedium (13) in Abhängigkeit von aufeinanderfolgenden Sätzen von Eingangsdatenabtastwerten, die Amplituden aufweisen, die Belichtungswerte für Bildelemente in aufeinanderfolgenden Zeilen des Bildes entsprechen, enthaltend:

ein vieltoriges Lichtventil (12) mit einem optisch durchlässigen elektrooptischen Element (17), das ein lineares Feld von im Abstand zueinander angeordneten, einzeln adressierbaren Elektroden (18a—18i) enthält,

und eine sich quer zum linearen Feld erstreckende Einrichtung zum Übertragen eines flächenhaften Lichtbündels (24) durch einen Wechselwirckungsbereich (29) des elektrooptischen Elements (17) derart, daß es sequentiell räumlich in Übereinstimmung mit den Eingangsdatentastewerten für aufeinanderfolgende Zeilen des Bildes moduliert wird, dadurch gekennzeichnet, daß

das elektrooptische Element (17) eine polierte Hauptfläche (21) hat, auf der und in innigem Kontakt mit der die Elektroden (18a—18i) in Form von Fingern angeordnet sind, daß das flächenhafte Lichtbündel (24) ein kollimiertes Bündel ist und durch das elektrooptische Element (17) derart übertragen wird, daß es auf die polierte Fläche (21) fällt und von ihr eine totale innere Reflexion erfährt, und daß vorgesehen sind:

eine Kodiereinrichtung (25) zum differentiellen Kodieren der Eingangsabtastwerte, um differentiellkodierte Datenabtastwerte zu erzeugen, die gegeneinander Spannungsabfälle aufweisen, die den Amplituden der Eingangsdatenabtastwerte entsprechen,

eine zwischen die Kodiereinrichtung (25) und die Elektroden (18a—18i) geschaltete Einrichtung (27) zum Anlegen der kodierten Abtastwerte an die Elektroden (18a—18i), um dadurch aufeinanderfolgende elektrische Randfeldmuster zu erzeugen, die den Wechselwirkungsbereich (29) des elektrooptischen Elements (17) begrenzen, und

eine mit der Kodiereinrichtung (25) verbundene Einrichtung (42, 48, 49, 51, 52), die den kodierten Datenabtastwerten periodisch entgegengesetzte Polaritäten auferlegen.

2. Elektrooptischer Zeilendrucker (11) nach Anspruch 1, dadurch gekennzeichnet, daß die Eingangsdatenabtastwerte serielle Digitaldatenbits sind, die hohe und niedrige logische Pegel und eine vorbestimmte Datenrate haben, und

der Differentialkodierer (25) die Bits digital kodiert, um digitalkodierte Datenabtastwerte zu erzeugen, die gegeneinander Logikpegelübergänge aufweisen, die Bits des einen Logikpegels darstellen und zueinander Logikpegelkontinuität haben, die Bits des anderen Pegels darstellen.

3. Elektrooptischen Zeilendrucker (11) nach Anspruch 2, dadurch gekennzeichnet, daß

der Kodierer (25) eine EXKLUSIV-ODER-Torschaltung (41), ein einstufiges Schieberegister (42) und eine Einrichtung zum Zuführen von Taktimpulsen zu dem Schieberegister mit der Datenrate enthält, wobei die Torschaltung (41) zwei Eingänge und einen Ausgang aufweist;

das Schieberegister (42) zwischen den Ausgang und einen Eingang der Torschaltung (41) geschaltet ist, um aufeinanderfolgende differentialkodierte Datenabtastwerte seriell der Torschaltung (41) zuzuführen; und

die Bits dem anderen Eingang der Torschaltung (41) seriell zugeführt werden, wodurch differentiellkodierte Datenabtastwerte in Abhängigkeit aller Bits mit Ausnahme eines ersten durch EXKLUSIV-ODER-Verknüpfung jedes Bits mit dem kodierten Abtastwert erzeugt werden, der in Abhängigkeit von einem unmittelbar vorausgehenden Bit erzeugt wird.

4. Elektrooptischer Zeilendrucker (11) nach einem der vorhergehenden Ansprüche, dadurch gekennzeichnet, daß die Polarität der kodierten Datenabtastwerte Zeile für Zeile umgekehrt wird, wodurch die Nominalpolarität der Randfelder Zeile für Zeile umgekehrt wird.

5. Drucker nach Anspruch 4, dadurch gekennzeichnet, daß er einen Zeilenlängenzähler (48) aufweist, der stufenweise mit einer vorbestimmten Datenrate weitergeschaltet wird, um Steuersignale zum Markieren von Grenzen zwischen den Eingangsdatenabtastwerten für aufeinanderfolgende Zeilen des Bildes zu erzeugen, und daß eine Einrichtung (49, 51, 52, 42) zum Umkehren der Polarität der kodierten Datenabtastwerte in Abhängigkeit von jedem der Steuersignale vorgesehen ist.

## Revendications

1. Dispositif électro-optique d'impression par ligne (11) pour l'impression d'une image sur un milieu d'enregistrement photosensible (13) en réponse à des ensembles successifs d'échantillons de données d'entrée ayant des amplitudes représentant des valeurs d'exposition pour des éléments d'image sur des lignes successives de l'image, le dispositif d'impression (11) comprenant:

— une valve de lumière (12) multi-porte ayant un élément électro-optique transmettant optiquement (17) ayant un réseau linéaire d'électrodes espacées adressables individuellement (18a—18i),

— et un moyen pour transmettre un faisceau lumineux en forme de feuille (24), s'étendant à travers le réseau linéaire, par l'intermédiaire d'une région d'interaction (29) de l'élément électro-optique (17) de manière à être modulé séquentiellement spatialement en conformité avec les échantillons des données d'entrée pour des lignes successives de l'image, caractérisé en ce que:

— l'élément électro-optique (17) a une face principale polie (21) sur laquelle, et en contact intime avec laquelle, sont disposées les électrodes (18a—18i) sous forme de doigts, en ce que le faisceau lumineux en forme de feuille (24) est un faisceau collimaté et est transmis par l'élément électro-optique (17) de sortie qu'il tombe sur la face polie (21) et est soumis à une réflexion interne totale par celle-ci, et en ce qu'on a prévu:

— un moyen de codage (25) pour coder différentiellement les échantillons d'entrée afin de fournir des échantillons de données codées différentiellement ayant des chutes de tension d'un échantillon à l'autre correspondant aux amplitudes des échantillons respectifs de données d'entrée;

— un moyen (27) couplé entre le moyen de codage (25) et les électrodes (18a—18i) pour appliquer les échantillons codés aux électrodes (18a—18i), ce qui a pour effet de créer des motifs de champs électriques marginaux successifs qui définissent la région d'interaction (29) de l'élément électro-optique (17); et

— un moyen (42, 48, 49, 51, 52) couplé au moyen de codage (25) pour imposer périodiquement des polarités opposées aux échantillons de données codés.

2. Dispositif électro-optique d'impression par ligne (11) selon la revendication 1, caractérisé en outre en ce que les échantillons de données d'entrée sont des bits de données numériques en série ayant des niveaux logiques haut et bas, et un débit de données prédéterminé; et

— le codeur différentiel (25) code numériquement les bits pour fournir des échantillons de données codés numériquement ayant des transitions de niveau logique échantillon à échantillon afin de représenter des bits d'un niveau logique et la continuité du niveau logique échantillon à échantillon pour représenter des bits de l'autre niveau.

3. Dispositif électro-optique d'impression par ligne (11) selon la revendication 2, caractérisé en outre en ce que:

— le codeur (25) comprend une porte du type OU Exclusif (41), un registre à décalage à un étage (42), et un moyen pour appliquer des impulsions d'horloge au registre à décalage au débit des bits, la porte (41) ayant une paire d'entrées et une sortie;

— le registre à décalage (42) est couplé entre la sortie et une entrée de la porte (41) pour appliquer en série à la porte (41) des échantillons successifs de données codées différentiellement; et

— les bits sont appliqués en série à l'autre entrée de la porte (41), d'où il résulte que des échantillons de données codées différentiellement sont produits en réponse à la totalité, à l'exception d'un premier des bits en soumettant chaque bit à une opération OU Exclusif, avec l'échantillon codé produit en réponse à un bit immédiatemment précédent.

4. Dispositif électro-optique d'impression par ligne (11) selon l'une quelconque des revendications précédentes, caractérisé en ce que la polarité des échantillons de données codées est inversé sur une base ligne par ligne, ce qui a pour effet d'inverser la polarité nominale des champs marginaux sur une base ligne par ligne.

5. Dispositif d'impression selon la revendication 4, caractérisé en ce qu'il a un compteur de longueur de ligne (48) qui est incrémenté à un débit des données prédéterminé afin de fournir des signaux de commande pour le marquage de frontières entre les échantillons de données d'entrée pour des lignes successives de l'image, et un moyen (49, 51, 52, 42) pour inverser la polarité des échantillons de données codées en réponse à chacun des signaux de commande.

FIG. 1

FIG. 2

FIG. 3

1

FIG. 4

FIG. 5

RAW DATA 0 0 0 1 1 0 1 0 0 0 1 1 1 1 0 0 0

DIFFERENTIALLY ENCODED DATA 0 0 0 0 1 0 0 1 1 1 1 0 1 0 1 1 1 1

28

FRINGE FIELD PATTERN

18A 18I

## FIG. 6A

RAW DATA 0 0 0 1 1 0 1 0 0 0 1 1 1 1 0 0 0

DIFFERENTIALLY ENCODED DATA 1 1 1 1 0 1 1 0 0 0 0 1 0 1 0 0 0 0

FRINGE FIELD PATTERN

18A 18I

## FIG. 6B

FIG. 7